# EUROPEAN PATENT APPLICATION

(11) **EP 4 712 217 A1**
(43) Date of publication of application: **18.03.2026**
(21) Application number: 25165826.6
(22) Date of filing: 25.03.2025
(51) Int. Cl.: H01M 50/103, H01M 50/176, H01M 50/533, H01M 50/566

(54) **SECONDARY BATTERY AND METHOD OF MANUFACTURING THE SAME**

(30) Priority: 12.09.2024 KR 20240124909
(71) Applicant: SAMSUNG SDI CO., LTD., Yongin-si, Gyeonggi-do 17084 (KR)
(72) Inventor: YOO, WHEE SANG, 16678 Suwon-si, Gyeonggi-do (KR); HWANG, SANG DAE, 16678 Suwon-si, Gyeonggi-do (KR)
(74) Representative: Gulde & Partner

(57) **Abstract**

A secondary battery, including a case, an electrode assembly in the case, a cap plate that seals the case, a tab member connected to the electrode assembly, the tab member extending toward the cap plate, a terminal body coupled to the cap plate, the terminal body facing the tab member, a guide plate extending from the terminal body, the guide plate being in the tab member, and a connection member in the terminal body, the connection member being connected to the tab member.

## Description

### BACKGROUND

### 1. Field

The present disclosure relates to a secondary battery and a method of manufacturing the same.

### 2. Description of the Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and generates energy through oxidation/reduction reactions when lithium ions are intercalated/deintercalated at the positive and negative electrodes.

The above-described information disclosed in the technology that forms the background of the present disclosure is only intended to improve understanding of the background of the present disclosure, and thus may include information that does not constitute the related art.

### SUMMARY

Embodiments include a secondary battery, including a case, an electrode assembly in the case, a cap plate that seals the case, a tab member connected to the electrode assembly, the tab member extending toward the cap plate, a terminal body coupled to the cap plate, the terminal body facing the tab member, a guide plate extending from the terminal body, the guide plate being in the tab member, and a connection member in the terminal body, the connection member being connected to the tab member.

The tab member may include one or more first tabs extending in a first direction from the electrode assembly and one or more second tabs extending in the first direction from the electrode assembly, the first tab and the second tab may face each other along a second direction intersecting the first direction, and the guide plate may be between the first tab and the second tab.

The guide plate may extend along a third direction intersecting the first direction and the second direction.

The tab member may further include a first bent portion at an end portion of the first tab and bent toward the second tab, and a second bent portion at an end portion of the second tab, the second bent portion being bent toward the first tab.

The first bent portion and the second bent portion may be between the terminal body and the guide plate.

The end portion of the first bent portion and the end portion of the second bent portion may face each other along the second direction.

The connection member may include a connection plate inserted into an insertion hole passing through the terminal body along the first direction, the connection plate being connected to the tab member, and a connection boss may be inserted into the insertion hole, the connection boss being connected to the connection plate and the terminal body.

The connection boss may include a first boss including a first boss surface in contact with the connection plate, and a second boss extending from the first boss, the second boss including a second boss surface exposed to the outside of the terminal body.

The terminal body may include a terminal surface outside the cap plate and perpendicular to the first direction, and the second boss surface and the terminal surface may be on a same plane.

A cross-sectional area of the second boss may increase toward the second boss surface.

The connection member may further include a first welded portion extending from the connection plate toward the tab member.

A first end portion of the first welded portion may be in the connection plate and a second end of the first welded portion may be in the guide plate.

The connection member may further include a second welded portion between the terminal body and the connection boss.

The connection member may further include a guide rod extending from the connection plate along the first direction, the guide rod being inserted into the connection boss.

The connection member may further include a guide welded portion between the connection boss and the guide rod.

Embodiments include a secondary battery manufacturing method, including disposing a terminal body on a tab member, the tab member including a first tab and a second tab, disposing a guide plate in the tab member, connecting the tab member and a connection plate, and connecting the terminal body, the connection plate, and a connection boss.

Disposing the guide plate in the tab member may include inserting the guide plate between the first tab and the second tab, bending the first tab toward the second tab to form a first bent portion, and bending the second tab toward the first tab to form a second bent portion.

Connecting the tab member and the connection plate may include inserting the connection plate into an insertion hole, bringing the connection plate into contact with the tab member, and forming a first welded portion from the connection plate toward the tab member.

In forming the first welded portion from the connection plate toward the tab member, a first end portion and a second end portion of the first welded portion are respectively disposed in the connection plate and the guide plate.

Connecting the terminal body, the connection plate, and the connection boss may include inserting the connection boss into the insertion hole, bringing the connection boss into contact with the connection plate, and forming a second welded portion between the terminal body and the connection boss.

These and other aspects and features of the present disclosure will be described in or will be apparent from the following description of some embodiments of the present disclosure.

### BRIEF DESCRIPTION OF THE DRAWINGS

Features will become apparent to those of ordinary skill in the art by describing in detail exemplary embodiments with reference to the attached drawings; in which:
FIG. 1 is a perspective view schematically illustrating a configuration of a secondary battery according to one or more embodiments of the present disclosure;
FIG. 2 is an exploded perspective view schematically illustrating the configuration of the secondary battery according to one or more embodiments of the present disclosure;
FIG. 3 is a cross-sectional view schematically illustrating the configuration of the secondary battery according to one or more embodiments of the present disclosure;
FIG. 4 is an exploded perspective view schematically illustrating a configuration of an electrode assembly according to one or more embodiments of the present disclosure;
FIG. 5 is a side view schematically illustrating configurations of a terminal body, a guide plate, and a connection member according to one or more embodiments of the present disclosure;
FIG. 6 is a front view schematically illustrating the configurations of the terminal body, the guide plate, and the connection member according to one or more embodiments of the present disclosure;
FIG. 7 is an exploded view schematically illustrating the configurations of the terminal body, the guide plate, and the connection member according to one or more embodiments of the present disclosure;
FIG. 8 is an enlarged view schematically illustrating the configuration of the connection member according to one or more embodiments of the present disclosure;
FIG. 9 is a flowchart schematically illustrating a secondary battery manufacturing method according to one or more embodiments of the present disclosure;
FIG. 10 is a flowchart schematically illustrating the order of disposing the guide plate in a tab member;
FIGS. 11 to 14 are views schematically illustrating a process of disposing the guide plate in the tab member;
FIG. 15 is a flowchart schematically illustrating the order of connecting the tab member and a connection plate;
FIGS. 16 and 17 are views schematically illustrating a process of connecting the tab member and the connection plate;
FIG. 18 is a flowchart schematically illustrating the order of connecting the terminal body, the connection plate, and a connection boss; and
FIGS. 19 and 20 are views schematically illustrating a process of connecting the terminal body, the connection plate, and the connection boss.

### DETAILED DESCRIPTION

Example embodiments will now be described more fully hereinafter with reference to the accompanying drawings; however, they may be embodied in different forms and should not be construed as limited to one or more embodiments set forth herein. Rather, these embodiments are provided so that this disclosure will be thorough and complete, and will fully convey exemplary implementations to those of ordinary skill in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

One or more embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify one or more embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

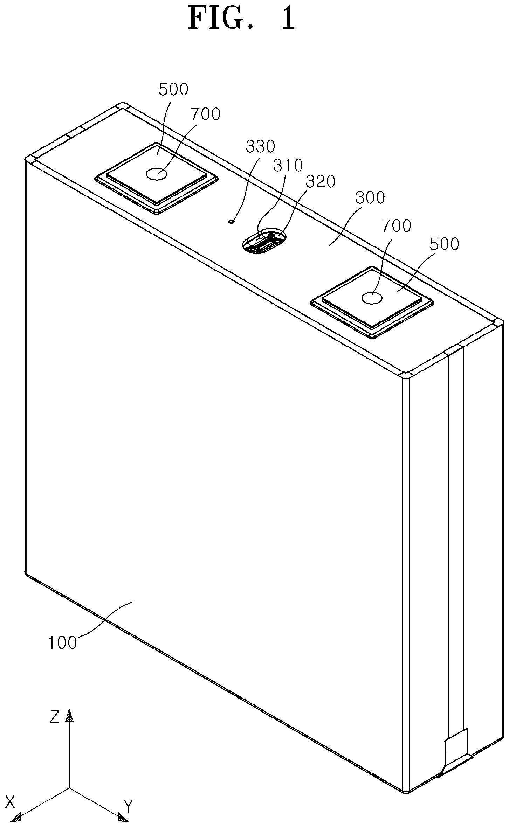

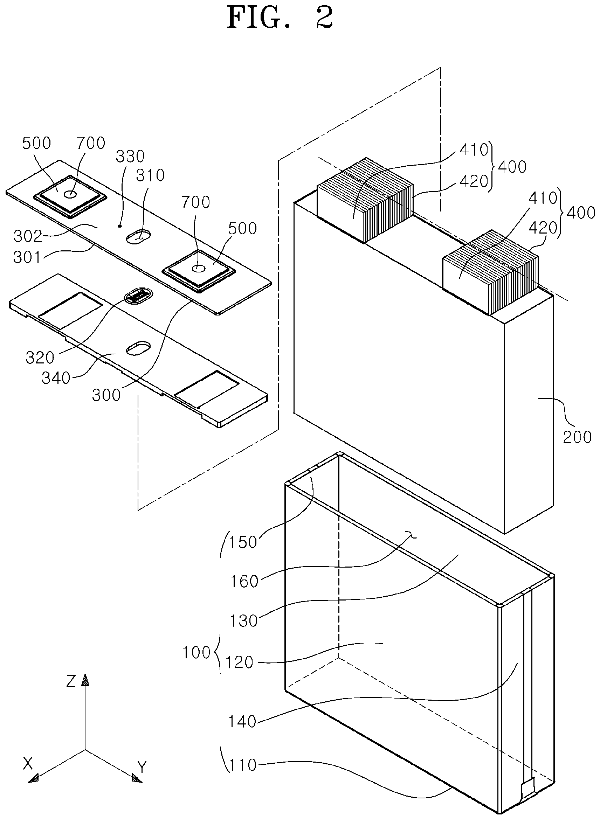

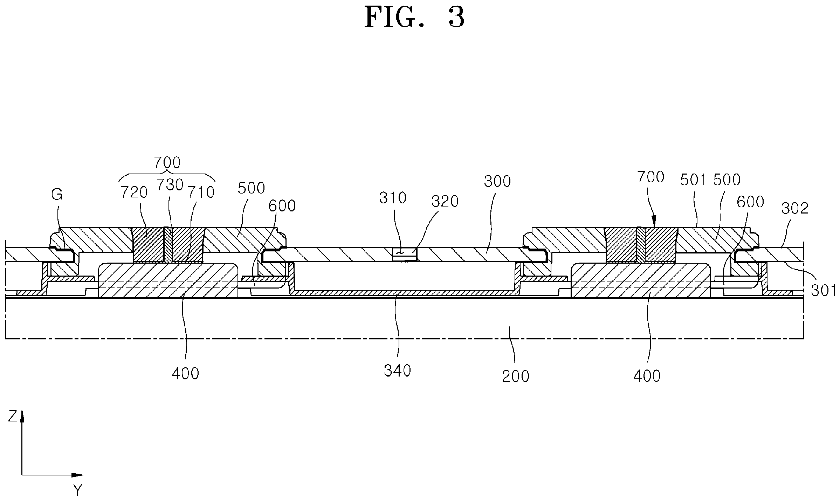

FIG. 1 is a perspective view schematically illustrating a configuration of a secondary battery according to one or more embodiments of the present disclosure, FIG. 2 is an exploded perspective view schematically illustrating the configuration of the secondary battery according to one or more embodiments of the present disclosure, and FIG. 3 is a cross-sectional view schematically illustrating the configuration of the secondary battery according to one or more embodiments of the present disclosure.

Hereinafter, an example in which the secondary battery is a prismatic battery as a lithium-ion secondary battery will be described. However, the present disclosure is not limited thereto, and the secondary battery may be a lithium polymer battery or cylindrical battery.

Referring to FIGS. 1 to 3, the secondary battery according to the present embodiment includes a case 100, an electrode assembly 200, a cap plate 300, a tab member 400, a terminal body 500, a guide plate 600, and a connection member 700.

The case 100 may form an approximate exterior of the secondary battery and accommodate the electrode assembly 200 therein.

The case 100 according to one or more embodiments may include a bottom portion 110, a front surface portion 120, a rear surface portion 130, a first side surface portion 140, and a second side surface portion 150.

The bottom portion 110 may form the exterior of a lower side of the case 100 (in the orientation shown). The bottom portion 110 according to one or more embodiments may have a rectangular plate shape.

The front surface portion 120, the rear surface portion 130, the first side surface portion 140, and the second side surface portion 150 may form the exterior of the periphery of the case 100.

The front surface portion 120, the rear surface portion 130, the first side surface portion 140, and the second side surface portion 150 according to one or more embodiments may have plate shapes extending upward (e.g., away) from the edges of the bottom portion 110. The front surface portion 120, the rear surface portion 130, the first side surface portion 140, and the second side surface portion 150 may be disposed to cover a space above the bottom portion 110.

The front surface portion 120 and the rear surface portion 130 may be disposed parallel to each other. Areas of the front surface portion 120 and the rear surface portion 130 may be the same.

The first side surface portion 140 and the second side surface portion 150 may be disposed parallel to each other. Areas of the first side surface portion 140 and the second side surface portion 150 may be the same. The areas (e.g., surface area) of the first side surface portion 140 and the second side surface portion 150 may be smaller than the areas of the front surface portion 120 and the rear surface portion 130.

Accordingly, the front surface portion 120, the rear surface portion 130, the first side surface portion 140, and the second side surface portion 150 according to one or more embodiments may be disposed to form a rectangular cross-sectional shape.

The case 100 may further include an opening 160. The opening 160 according to one or more embodiments may mean a space surrounded by upper end portions (in the orientation shown) of the front surface portion 120, the rear surface portion 130, the first side surface portion 140, and the second side surface portion 150. The opening 160 may interconnect inner and outer spaces of the case 100.

Accordingly, the case 100 according to one or more embodiments may have a rectangular parallelepiped shape having an open upper side.

A first direction to be described below may mean a direction parallel to a Z-axis and a direction from the bottom portion 110 toward the opening 160 based on FIGS. 1 to 3. A second direction may mean a direction parallel to an X-axis and a direction from the front surface portion 120 toward the rear surface portion 130 based on FIGS. 1 to 3. A third direction may mean a direction parallel to a Y-axis and a direction from the first side surface portion 140 toward the second side surface portion 150 based on FIGS. 1 to 3.

The electrode assembly 200 may function as a unit structure which performs charging and discharging operations of power in the secondary battery. The electrode assembly 200 may be accommodated in the case 100.

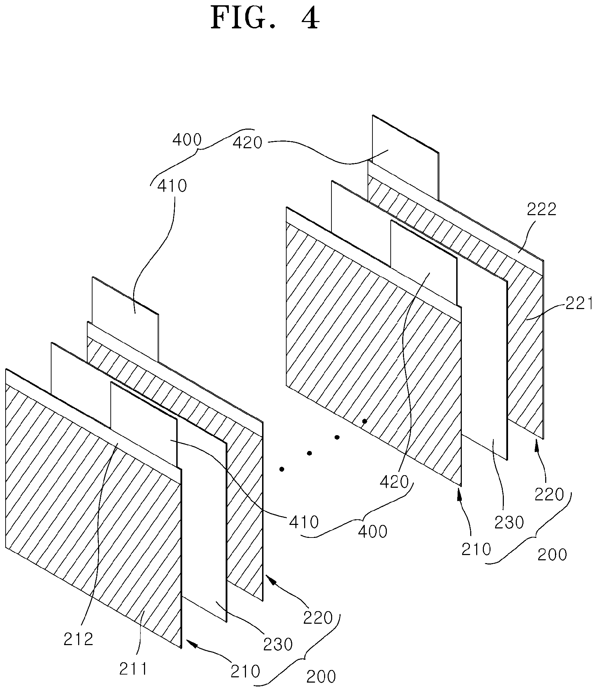

FIG. 4 is an exploded perspective view schematically illustrating a configuration of an electrode assembly according to one or more embodiments of the present disclosure.

Referring to FIGS. 1 to 4, the electrode assembly 200 according to one or more embodiments may include a first electrode 210, a second electrode 220, and a separator 230 disposed between the first electrode 210 and the second electrode 220. A plurality of first electrodes 210, separators 230, and second electrodes 220 may be provided.

Hereinafter, the electrode assembly 200 will be described as having a stacked form in which the plurality of first electrodes 210, separators 230, and second electrodes 220 are sequentially stacked along the second direction. However, it is also possible to have a form in which, for example, the first electrodes 210, the separators 230, and the second electrodes 220 are stacked and wound around a winding axis in a clockwise direction or counterclockwise direction.

The first electrode 210 may function as either a positive electrode or negative electrode of the electrode assembly 200. Hereinafter, an example in which the first electrode 210 is the positive electrode of the electrode assembly 200 will be described. However, the first electrode 210 may instead function as the negative electrode of the electrode assembly 200.

The first electrode 210 according to one or more embodiments may be formed to have a foil shape including a metal material such as aluminum or an aluminum alloy. The type, size, shape or the like of the first electrode 210 may vary, as long as it has conductivity and does not cause a chemical change in the secondary battery. A cross-sectional shape of the first electrode 210 may be designed to have various shapes in addition to the rectangular shape shown in FIG. 4.

A plurality of first electrodes 210 may be provided. The plurality of first electrodes 210 may be arranged between the front surface portion 120 and the rear surface portions 130 of the case 100 along the second direction (e.g., along the x-axis direction). The number of first electrodes 210 may be designed in various ways depending on the charging capacity and the like of the secondary battery.

A first active material layer 211 may be applied on at least a portion of the first electrode 210. The first active material layer 211 may be applied on both surfaces of the first electrode 210, or alternatively, may be applied on only one surface of the first electrode 210.

Since the first electrode 210 functions as a positive electrode in one or more embodiments, the first active material layer 211 may include a positive electrode active material.

The positive electrode active material may be a compound capable of reversibly intercalating and deintercalating lithium (a lithiated intercalation compound). More specifically, one or more types of a composite oxide of lithium and a metal selected from cobalt, manganese, nickel, iron, and a combination thereof may be used.

For example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, x+y+z=1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM), or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer 211 may further include a positive electrode conductive material.

The positive electrode conductive material is used to impart conductivity to the first active material layer 211, and any material which does not cause a chemical change and is electrically conductive may be used. Examples of the positive electrode conductive material may include a carbon-based material such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer such as a polyphenylene derivative or the like, or a mixture thereof.

The first active material layer 211 may further include a positive electrode binder.

The positive electrode binder serves to attach the particles constituting the positive electrode active material to each other well, and also attach the positive electrode active material to the first electrode 210 well.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

When the aqueous binder is used as the positive electrode binder, a cellulose-based compound capable of imparting viscosity may be further included. As the cellulose-based compound, one or more types of carboxymethyl cellulose, hydroxypropylmethyl cellulose, methyl cellulose, or alkali metal salts thereof may be used in combination. Na, K, or Li may be used as the alkali metal.

The dry binder is a polymer material which may be fiberized and may be, for example, polytetrafluoroethylene, polyvinylidene fluoride, a polyvinylidene fluoride-hexafluoropropylene copolymer, polyethylene oxide, or a combination thereof.

The first electrode 210 may include a first uncoated portion 212 on which the first active material layer 211 is not applied. The first uncoated portion 212 according to one or more embodiments may be disposed in an upper end region of the first electrode 210 disposed to face the opening 160 in the case 100. However, the first uncoated portion 212 may be formed over an entire edge region of the first electrode 210.

The second electrode 220 may function as the other of the positive electrode and the negative electrode of the electrode assembly 200. Hereinafter, the second electrode 220 will be described as an example of the negative electrode of the electrode assembly 200. However, the second electrode 220 may also function as the positive electrode of the electrode assembly 200.

A plurality of second electrodes 220 may be provided. The plurality of second electrodes 220 may be arranged between the front surface portion 120 and the rear surface portion 130 of the case 100 along the second direction. The first electrodes 210 and the second electrodes 220 may be alternately disposed along the second direction. The second electrode 220 may be spaced apart from the first electrode 210 by a set interval along the second direction.

The second electrode 220 according to one or more embodiments may be formed to have a foil shape including a metal material such as copper, a copper alloy, nickel, or a nickel alloy. The type, size, shape or the like of the second electrode 220 may vary, as long as it has conductivity and does not cause a chemical change in the secondary battery. A cross-sectional shape of the second electrode 220 may be designed to have various shapes in addition to the rectangular shape shown in FIG. 4.

A second active material layer 221 may be applied on at least a portion of the second electrode 220. The second active material layer 221 may be applied on both surfaces of the second electrode 220, or alternatively, may be applied on only one surface of the second electrode 220.

Since the second electrode 220 functions as a negative electrode in one or more embodiments, the second active material layer 221 may include a negative electrode active material.

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating and deintercalating lithium ions may include a carbon-based negative electrode active material, for example, crystalline carbon, amorphous carbon, or a combination thereof. An example of crystalline carbon may be graphite such as amorphous, plate-shaped, flaky, spherical, or fibrous natural graphite or artificial graphite, and an example of amorphous carbon may be soft carbon or hard carbon, mesophase pitch carbide, calcined coke, or the like.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

A Si-based negative electrode active material or a Sn-based negative electrode active material may be used as the material capable of doping and dedoping lithium. The Si-based negative electrode active material may be silicon, a silicon-carbon composite, SiOₓ (0 < x ≤ 2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnOx(0 < x ≤ 2, e.g., SnO2), a Sn-based alloy, or a combination thereof.

The silicon-carbon composite may be a composite of silicon and amorphous carbon. According to one or more embodiments, the silicon-carbon composite may be in the form of silicon particles whose surfaces are coated with amorphous carbon. For example, the silicon-carbon composite may include a secondary particle (a core) in which silicon primary particles are assembled, and an amorphous carbon coating layer (a shell) located on the surface of the secondary particle. The amorphous carbon may also be located between the silicon primary particles, and for example, the silicon primary particles may be coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer located on the surface of the core.

The Si-based negative electrode active material or the Sn-based negative electrode active material may be used in combination with the carbon-based negative electrode active material.

The second active material layer 221 may further include a negative electrode conductive material and a negative electrode binder.

The negative electrode conductive material is used to impart conductivity to the second active material layer 221, and any material which does not cause a chemical change and is electrically conductive may be used. Examples of the negative electrode conductive material may include a carbon-based material such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer such as a polyphenylene derivative or the like, or a mixture thereof.

The negative electrode binder serves to attach the particles constituting the negative electrode active material to each other well, and also attach the negative electrode active material to the second electrode 220 well.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, a cellulose-based compound capable of imparting viscosity may be further included. As the cellulose-based compound, one or more types of carboxymethyl cellulose, hydroxypropylmethyl cellulose, methyl cellulose, and alkali metal salts thereof may be used in combination. Na, K, or Li may be used as the alkali metal.

The dry binder is a polymer material which may be fiberized and may be, for example, polytetrafluoroethylene, polyvinylidene fluoride, a polyvinylidene fluoride-hexafluoropropylene copolymer, polyethylene oxide, or a combination thereof.

The second electrode 220 may include a second uncoated portion 222 on which the second active material layer 221 is not applied. The second uncoated portion 222 according to one or more embodiments may be disposed in an upper end region of the second electrode 220 disposed to face the opening 160 in the case 100. However, the form of the second uncoated portion 222 may vary, and the second uncoated portion 222 may be formed over an entire edge region of the second electrode 220.

The separator 230 may be disposed between the first electrode 210 and the second electrode 220. The separator 230 may perform a function of preventing a short circuit between the first electrode 210 and the second electrode 220 while allowing lithium ions to move between the first electrode 210 and the second electrode 220.

The separator 230 may be disposed to entirely cover a surface region of the electrode assembly 200. Accordingly, the separator 230 may prevent the first electrode 210 and the second electrode 220 from being directly exposed to the outside of the electrode assembly 200.

As the separator 230, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator 230 may include a porous substrate and a coating layer containing an organic material, an inorganic material, or a combination thereof located on one surface or both surfaces of the porous substrate.

The porous substrate may be a polymer film formed of one polymer selected from polyolefins such as polyethylene and polypropylene, polyesters such as polyethylene terephthalate and polybutylene terephthalate, polyacetal, polyamide, polyimide, polycarbonate, polyether ketone, polyaryletherketone, polyetherimide, polyamideimide, polybenzimidazole, polyether sulfone, polyphenylene oxide, a cyclic olefin copolymer, polyphenylene sulfide, polyethylene naphthalate, glass fibers, Teflon, and polytetrafluoroethylene or a copolymer or mixture of two or more thereof.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in one coating layer, or present in a form in which a coating layer containing an organic material and a coating layer containing an inorganic material are stacked.

The cap plate 300 may be coupled to the case 100 and seal the case 100.

The cap plate 300 according to one or more embodiments may be formed to have a flat plate shape. The cap plate 300 may be disposed in the opening 160 of the case 100. The cap plate 300 may be disposed to face the electrode assembly 200 along the first direction. That is, the cap plate 300 may be disposed at a position spaced apart from the electrode assembly 200 by a set distance in the first direction (the z-axis direction). The cap plate 300 may be disposed parallel to the bottom portion 110 of the case 100.

The cap plate 300 may be seated on an upper end portion of the case 100 (in the orientation shown), more specifically, on the upper end portions of the front surface portion 120, the rear surface portion 130, the first side surface portion 140, and the second side surface portion 150. The cap plate 300 may be coupled to the case 100 by various types of coupling methods such as welding, bolting, latching, fitting and the like.

The cap plate 300 may include a first cap surface 301 and a second cap surface 302 that are opposite to each other.

The first cap surface 301 and the second cap surface 302 of the cap plate 300 (see FIG. 3) may be disposed to be spaced apart from each other along the first direction. The first cap surface 301 may be disposed to face the electrode assembly 200.

The first cap surface 301 may be exemplified as a lower surface of the cap plate 300 disposed to face an upper surface of the electrode assembly 200 from which a first tab 410 and a second tab 420 protrude.

The second cap surface 302 may be disposed to face the space outside the case 100. The second cap surface 302 may be exemplified as an upper surface of the cap plate 300 disposed opposite to the first cap surface 301.

A vent hole 310 and a vent 320 may be formed in the cap plate 300 according to one or more embodiments.

The vent hole 310 according to one or more embodiments may be formed to have a hole shape which vertically passes through the first cap surface 301 and the second cap surface 302 of the cap plate 300 along the first direction. The vent hole 310 may function as a configuration providing a path through which flames, gas, smoke, or the like formed in the case 100 is discharged to the outside of the case 100 when thermal runaway of the secondary battery occurs due to an overcurrent or the like. A cross-sectional shape of the vent hole 310 may be designed to have various shapes such as an oval shape, a circular shape, a polygonal shape, and the like.

The vent 320 may be installed in the vent hole 310 and opened and closed in response to a change in internal pressure of the case 100. That is, the vent 320 may prevent an electrolyte and the like in the case 100 from leaking out of the case 100 or moisture, foreign substances, and the like from entering the case 100 by closing the vent hole 310 when the secondary battery normally operates. The vent 320 may induce flames, gas, smoke, or the like formed in the case 100 to be discharged to the outside of the case 100 by opening the vent hole 310 when thermal runaway of the secondary battery occurs.

The vent 320 according to one or more embodiments may be formed to have a substantially plate shape. The vent 320 may be fixed to the cap plate 300 by various types of coupling methods such as welding, bolting, latching, fitting and the like. The vent 320 may be disposed in the vent hole 310, or disposed to face the vent hole 310 at an upper or lower side of the cap plate 300 along the first direction.

A thickness of the vent 320 parallel to the first direction may be less than a thickness of the cap plate 300. Accordingly, the vent 320 may be easily ruptured or broken when the internal pressure of the case 100 rises. The vent 320 may include a notch formed concavely toward the inside of the vent 320 to be preferentially broken when the internal pressure of the case 100 rises.

An electrolyte inlet 330 formed to pass through the cap plate 300 and in which a sealing stopper may be installed may be formed in the cap plate 300 according to one or more embodiments. The electrolyte inlet 330 may be disposed to be spaced apart from the vent hole 310 by a certain interval in a third direction (e.g., positive y-axis direction) or in a direction opposite to the third direction (e.g., negative y-axis direction).

An insulating plate 340 may be disposed between the electrode assembly 200 and the cap plate 300 according to one or more embodiments. The insulating plate 340 may prevent direct contact between the cap plate 300 and the electrode assembly 200 to insulate the cap plate 300 and the electrode assembly 200. The insulating plate 340 may fix a position of the electrode assembly 200 in the case 100. The insulating plate 340 may prevent the electrode assembly 200 from being damaged when the cap plate 300 is deformed toward the inside of the case 100 due to an external impact or the like.

The insulating plate 340 according to one or more embodiments may be disposed to face the electrode assembly 200 in the case 100 along the first direction. That is, the electrode assembly 200, the insulating plate 340, and the cap plate 300 may be sequentially disposed along the first direction. The insulating plate 340 may be fixed to an inner side surface of the case 100 or the first cap surface 301 of the cap plate 300 by various types of coupling methods such as fitting, welding, bolting, latching, adhesion and the like. The insulating plate 340 may be formed of an insulating material such as polyethylene (PE), polypropylene (PP), polyethylene terephthalate (PET), rubber, or the like.

The tab member 400 may be connected to the electrode assembly 200. The tab member 400 may extend toward the cap plate 300 from the electrode assembly 200. As the electrode assembly 200 and the cap plate 300 are disposed to face each other along the first direction, the tab member 400 may have a shape protruding from the electrode assembly 200 along the first direction.

A pair of tab members 400 may be provided. The pair of tab members 400 may be spaced apart from each other at a certain interval on the electrode assembly 200 along the third direction.

Each of the tab members 400 according to one or more embodiments may include a first tab 410 and a second tab 420.

The first tab 410 and the second tab 420 according to one or more embodiments may extend from the electrode assembly 200 along the first direction. The first tab 410 and the second tab 420 may have substantially rectangular foil shapes. The first tab 410 and the second tab 420 may be disposed to face each other along the second direction.

A plurality of first tabs 410 and second tabs 420 may be provided. The plurality of first tabs 410 and second tabs 420 may be arranged along the second direction. For example, the tab member 400 may be configured in a form in which the plurality of first tabs 410 arranged along the second direction and the plurality of second tabs 420 arranged along the second direction face each other along the second direction. More specifically, the tab members 400 may be configured in a form in which the plurality of first tabs 410 and the plurality of second tabs 420 are sequentially stacked along the second direction. The form in which the plurality of first tabs 410 and the plurality of second tabs 420 are sequentially stacked may mean a form in which the plurality of first tabs 410 are stacked along the second direction and then the plurality of second tabs 420 are stacked along the second direction.

The number of first tabs 410 and the number of second tabs 420 may be the same, or may also be different.

However, the first tab 410 and the second tab 420 are not limited thereto, and the first tab 410 and the second tab 420 may be formed singly, and only one of the first tab 410 and the second tab 420 may also be formed singly.

One tab member 400 among the pair of tab members 400 (one of 410 and 420) may be connected to the first electrode 210 of the electrode assembly 200 and the other tab member (the other of 410 and 420) may be connected to the second electrode 220 of the electrode assembly 200. Accordingly, the pair of tab members 400 may respectively function as a positive electrode tab and a negative electrode tab of the secondary battery.

The first tab 410 and the second tab 420 of one tab member 400 among the pair of tab members 400 may extend from the first uncoated portion 212 of the first electrode 210 along the first direction. The first tab 410 of one tab member 400 among the pair of tab members 400 may extend from some first electrodes 210 of the first electrodes 210 stacked along the second direction. The second tab 420 of one tab member 400 among the pair of tab members 400 may extend from the remaining first electrodes 210 excluding the first electrodes 210 on which the first tabs 410 are formed among the first electrodes 210 stacked along the second direction.

The first tab 410 and the second tab 420 of the other tab member 400 among the pair of tab members 400 may extend from the second uncoated portion 222 of the second electrode 220 along the first direction. The first tab 410 of the other tab member 400 among the pair of tab members 400 may extend from some second electrodes 220 of the second electrodes 220 stacked along the second direction. The second tab 420 of the other tab member 400 among the pair of tab members 400 may extend from the remaining second electrodes 220 excluding the second electrodes 220 on which the second tabs 420 are formed among the second electrodes 220 stacked along the second direction.

The terminal body 500 may be coupled to the cap plate 300 and may be disposed to face the tab member 400. The terminal body 500 may be electrically connected to the tab member 400 by the guide plate 600 and the connection member 700 to be described below.

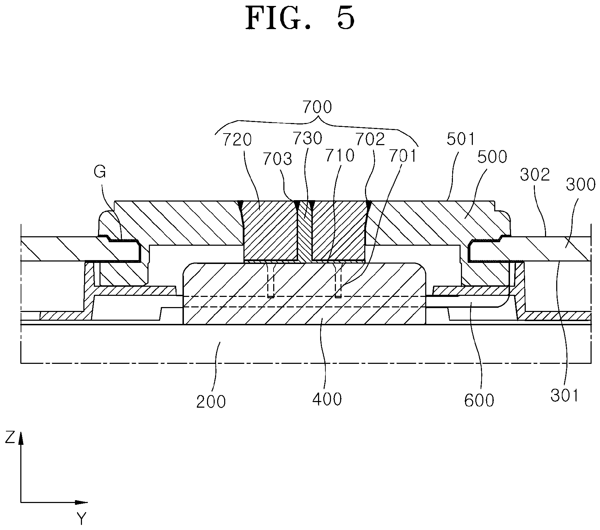

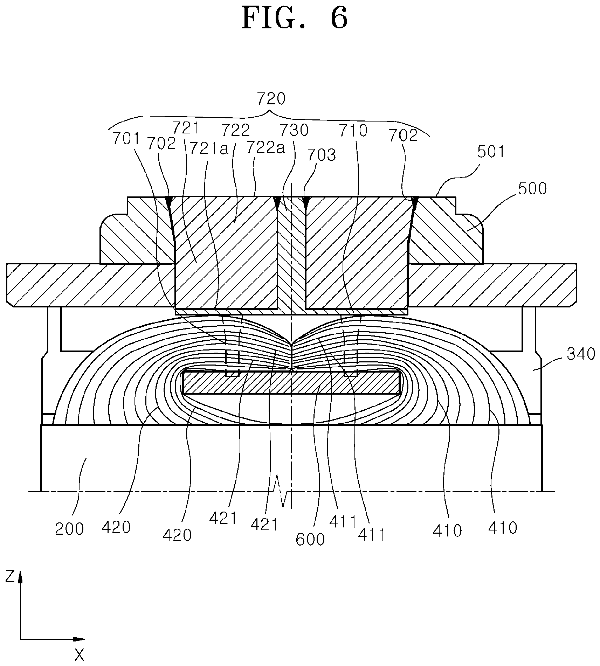

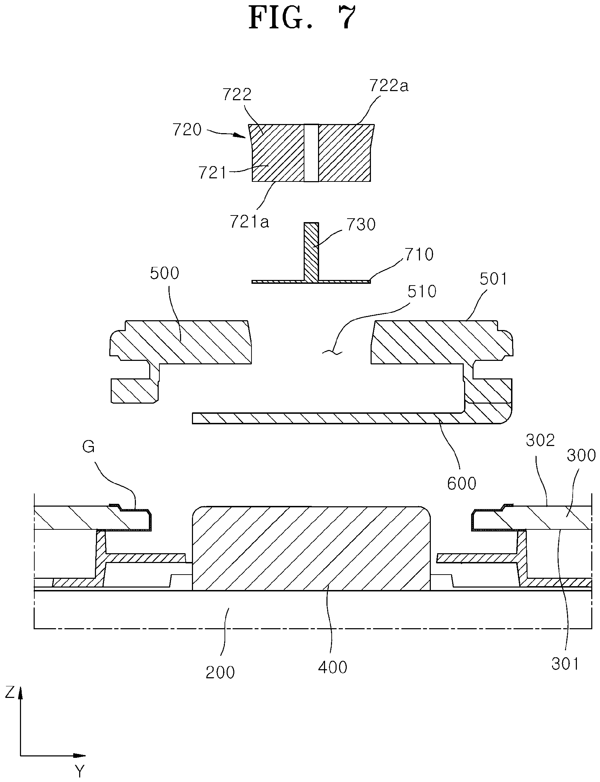

FIG. 5 is a side view schematically illustrating configurations of the terminal body, the guide plate, and the connection member according to one or more embodiments of the present disclosure, FIG. 6 is a front view schematically illustrating the configurations of the terminal body, the guide plate, and the connection member according to one or more embodiments of the present disclosure, and FIG. 7 is an exploded view schematically illustrating the configurations of the terminal body, the guide plate, and the connection member according to one or more embodiments of the present disclosure.

Referring to FIGS. 1 to 7, the terminal body 500 according to one or more embodiments may be formed of an electrically conductive material such as aluminum, nickel, copper, or the like. The terminal body 500 may pass through the cap plate 300 along the first direction. An upper end portion of the terminal body 500 may protrude outward from the cap plate 300, and a lower end portion of the terminal body 500 may protrude into the case 100. The specific shape of the terminal body 500 may vary from the shape shown in FIGS. 5 to 7, and may be designed to have various shapes.

A terminal surface 501 may be formed on the terminal body 500.

The terminal surface 501 according to one or more embodiments may mean an upper surface of the terminal body 500 protruding outward from the cap plate 300. The terminal surface 501 may be disposed perpendicular to the first direction.

An insertion hole 510 may be formed in the terminal body 500.

The insertion hole 510 (see FIG. 7) according to one or more embodiments may have a hole shape passing through the terminal body 500 along the first direction. Both end portions of the insertion hole 510 may be respectively connected to the space outside the cap plate 300 and the space inside the case 100. A cross-sectional shape of the insertion hole 510 may have a circular shape. However, the cross-sectional shape of the insertion hole 510 may be designed to have various shapes such as an oval shape, a polygonal shape, and the like.

A gasket G (see FIGS. 3 and 7) may be disposed between the terminal body 500 and the cap plate 300. The gasket G may function as a configuration which insulates the terminal body 500 and the cap plate 300 and prevents foreign substances, moisture, and the like from entering between the terminal body 500 and the cap plate 300. The gasket G may be formed of an insulating material such as polyethylene (PE), polypropylene (PP), polyethylene terephthalate (PET), rubber, or the like.

A pair of terminal bodies 500 may be provided. The pair of terminal bodies 500 may be spaced apart from each other at a certain interval along the third direction. The pair of terminal bodies 500 may be disposed to face each other along the third direction with the vent hole 310 therebetween.

The pair of terminal bodies 500 may be disposed to face different tab members 400 along the first direction. The pair of terminal bodies 500 may be electrically connected to different tab members 400 by the guide plate 600 and the connection member 700. Accordingly, the pair of terminal bodies 500 may respectively function as a positive electrode terminal and a negative electrode terminal of the secondary battery.

The guide plate 600 may extend from the terminal body 500 and may be disposed in the tab member 400. The guide plate 600 may function as a configuration which aligns a relative position of the tab member 400 with respect to the connection member 700 to be described below and supports the tab member 400.

A pair of guide plates 600 may be provided. Each of the guide plates 600 may individually extend from different terminal bodies 500. Each of the guide plates 600 may be disposed in different tab members 400.

The guide plate 600 according to one or more embodiments may have a plate shape extending from a lower end portion of the terminal body 500 along the third direction. Both sides of the guide plate 600 may be disposed perpendicular to the first direction. That is, a longitudinal direction of the guide plate 600 may be arranged parallel to the third direction, a width direction of the guide plate 600 may be arranged parallel to the second direction, and a thickness direction of the guide plate 600 may be arranged parallel to the first direction. A length of the guide plate 600 may be designed in various ways within a range which allows the guide plate 600 to completely pass through the tab member 400 along the third direction.

The guide plate 600 may be disposed to face the insertion hole 510 along the first direction.

The guide plate 600 may be disposed between the first tab 410 and the second tab 420. That is, the guide plate 600 may divide the tab member 400 in the second direction based on a boundary region of the first tab 410 and the second tab 420. The first tab 410 and the second tab 420 may be spaced apart from each other along the second direction with the guide plate 600 therebetween.

A first bent portion 411 and a second bent portion 421 may be respectively formed in the first tab 410 and the second tab 420.

The first bent portion 411 may be disposed at an end portion of the first tab 410 and may be bent toward the second tab 420. The first bent portion 411 may be disposed between a lower surface of the terminal body 500 and an upper surface of the guide plate 600. The first bent portion 411 may be supported by being seated on the upper surface of the guide plate 600. The first bent portion 411 may be disposed on the guide plate 600 to face the insertion hole 510 along the first direction.

The second bent portion 421 may be disposed at an end portion of the second tab 420 and may be bent toward the first tab 410. The second bent portion 421 may be disposed between the lower surface of the terminal body 500 and the upper surface of the guide plate 600. The second bent portion 421 may be supported by being seated on the upper surface of the guide plate 600. The second bent portion 421 may be disposed on the guide plate 600 to face the insertion hole 510 along the first direction.

The end portion of the first bent portion 411 and the end portion of the second bent portion 421 may be disposed to face each other along the second direction. That is, the end portion of the first bent portion 411 and the end portion of the second bent portion 421 may be disposed not to be stacked along the first direction. Accordingly, the first bent portion 411 and the second bent portion 421 may prevent damage to the tab member 400 and deterioration of welding quality by preventing the first tab 410 and the second tab 420 from interfering with each other on the guide plate 600. The end portion of the first bent portion 411 and the end portion of the second bent portion 421 may be spaced apart from each other at a certain interval along the second direction and may also be in contact with each other.

A width of the guide plate 600 parallel to the second direction may be greater than or equal to 10 mm and smaller than or equal to 15 mm. For example, the width of the guide plate 600 parallel to the second direction may be 12 mm.

If the width of the guide plate 600 parallel to the second direction is smaller than 10 mm, since a joint region between the tab member 400 and the guide plate 600 is excessively reduced, electrical conduction performance may deteriorate. If the width of the guide plate 600 parallel to the second direction is greater than 15 mm, there is a problem in that processing the first bent portion 411 and the second bent portion 421 is difficult.

Lengths of the first tab 410 and the second tab 420 extending from the electrode assembly 200 may be greater than or equal to 10 mm and smaller than or equal to 14 mm. For example, the lengths of the first tab 410 and the second tab 420 extending from the electrode assembly 200 may be 13.8 mm.

When the lengths of the first tab 410 and the second tab 420 extending from the electrode assembly 200 are smaller than 10 mm, the first bent portion 411 and the second bent portion 421 may not be located on the guide plate 600 or may not be disposed to face the insertion hole 510.

When the lengths of the first tab 410 and the second tab 420 extending from the electrode assembly 200 are greater than 14 mm, since the first bent portion 411 and the second bent portion 421 may be stacked along the first direction, there is a risk that interference between the first tab 410 and the second tab 420 occurs.

The connection member 700 may be disposed in the terminal body 500 (e.g., in insertion hole 510) and may be connected to the tab member 400. The connection member 700 may function as a configuration which electrically connects the terminal body 500 and the tab member 400.

A pair of connection members 700 may be provided. The pair of connection members 700 may be individually disposed in different terminal bodies 500. The pair of connection members 700 may electrically connect different tab members 400 to each terminal body 500.

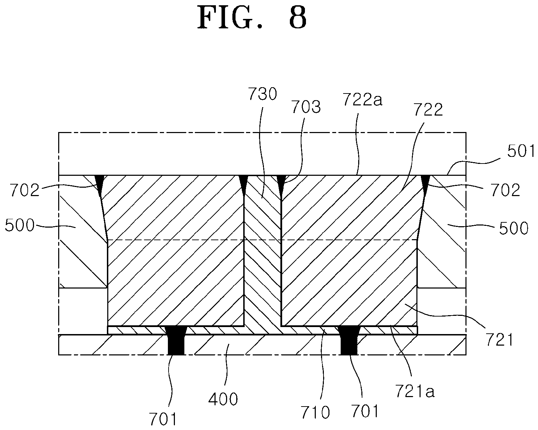

FIG. 8 is an enlarged view schematically illustrating the configuration of the connection member according to one or more embodiments of the present disclosure.

Referring to FIGS. 1 to 8, the connection member 700 according to one or more embodiments may include a connection plate 710 and a connection boss 720.

The connection plate 710 may be inserted into the insertion hole 510 and may be connected to the tab member 400.

The connection plate 710 according to one or more embodiments may have a flat plate shape in which both upper and lower surfaces are disposed perpendicular to the first direction. The connection plate 710 may be inserted into the insertion hole 510 through an upper end portion of the insertion hole 510 passing through the terminal surface 501 in a direction opposite to the first direction. A cross-sectional shape of the connection plate 710 may be formed to correspond to a cross-sectional shape of the insertion hole 510. A peripheral surface of the connection plate 710 may be in contact with an inner circumferential surface of the terminal body 500 which surrounds the insertion hole 510, or in other embodiments, may also be disposed to be spaced apart from the inner circumferential surface of the terminal body 500 at a certain interval.

The connection plate 710 may be in contact with the tab member 400. For example, a lower surface of the connection plate 710 may be in contact with the first bent portion 411 of the first tab 410 and the second bent portion 421 of the second tab 420 disposed on the guide plate 600.

The connection plate 710 may be formed of an electrically conductive material such as aluminum, nickel, copper, or the like. Accordingly, the connection plate 710 may be electrically connected to the tab member 400.

The connection plate 710 and the tab member 400 may be joined by a first welded portion 701.

The first welded portion 701 according to one or more embodiments may extend toward the tab member 400 from the connection plate 710. An extending direction of the first welded portion 701 may be parallel to the first direction. The first welded portion 701 may be formed by various types of welding methods such as laser welding, ultrasonic welding, friction stir welding, and the like.

Both end portions of the first welded portion 701 may be respectively disposed in the connection plate 710 and the guide plate 600. That is, the first welded portion 701 may have a shape extending from the connection plate 710 to the guide plate 600 through the tab member 400. Accordingly, the first welded portion 701 may prevent the tab member 400 from being separated from the guide plate 600 and may more firmly fix the tab member 400 between the terminal body 500 and the guide plate 600. The first welded portion 701 may be formed of a mixture of the connection plate 710, the tab member 400, and the guide plate 600 which are melted by the heat generated during welding.

A plurality of first welded portions 701 may be provided. Some first welded portions 701 among the plurality of first welded portions 701 may have a shape extending from the connection plate 710 to the guide plate 600 through the first bent portion 411 of the first tab 410.

The remaining first welded portions 701 among the plurality of first welded portions 701 may have a shape extending from the connection plate 710 to the guide plate 600 through the second bent portion 421 of the second tab 420.

The connection boss 720 may be inserted into the insertion hole 510 and connected to the connection plate 710 and the terminal body 500. The connection boss 720 may be formed of an electrically conductive material such as aluminum, nickel, copper, or the like.

The connection boss 720 according to one or more embodiments may include a first boss 721 (e.g., a bottom portion of connection boss 720) and a second boss 722 (e.g., a top portion of connection boss 720).

The first boss 721 may form the exterior of a lower side of the connection boss 720 and may be connected to the connection plate 710.

The first boss 721 according to one or more embodiments may have a substantially cylindrical shape. The first boss 721 may be inserted into the insertion hole 510 through an upper end portion of the insertion hole 510 passing through the terminal surface 501 in the direction opposite to the first direction (e.g., the negative z-axis direction). A circumferential surface of the first boss 721 may be in contact with an inner circumferential surface of the terminal body 500 which surrounds the insertion hole 510.

A first boss surface 721a in contact with an upper surface of the connection plate 710 may be formed on a lower surface of the first boss 721. The first boss surface 721a may be disposed parallel to the upper surface of the connection plate 710.

The second boss 722 may form the exterior of an upper side of the connection boss 720.

The second boss 722 may extend upward from the first boss 721, that is, in the first direction. The second boss 722 may be inserted into the insertion hole 510 through the upper end portion of the insertion hole 510 passing through the terminal surface 501 along with the first boss 721 in the direction opposite to the first direction. A circumferential surface of the second boss 722 may be in contact with the inner circumferential surface of the terminal body 500 which surrounds the insertion hole 510.

A second boss surface 722a exposed to the outside of the terminal body 500 may be formed on an upper surface of the second boss 722. The second boss surface 722a may be disposed parallel to the terminal surface 501. The second boss surface 722a may be disposed on the same plane as the terminal surface 501. Accordingly, the second boss 722 may further enhance the electrical conduction performance of the secondary battery by expanding a contact area with a bus bar seated on the terminal body 500.

The second boss 722 may be formed so that a cross-sectional area increases toward the second boss surface 722a. For example, the second boss 722 may have a truncated cone shape in which a cross-sectional area of an upper end portion is larger than a cross-sectional area of a lower end portion. Accordingly, the second boss 722 may allow the connection boss 720 to be smoothly inserted into the insertion hole 510, and may prevent the connection boss 720 from moving in the insertion hole 510 due to a clearance or the like.

The connection boss 720 and the terminal body 500 may be joined by the second welded portion 702.

The second welded portion 702 according to one or more embodiments may be disposed between the connection boss 720 and the terminal body 500. The second welded portion 702 may extend from the terminal surface 501 and the second boss surface 722a along the direction opposite to the first direction. A longitudinal direction of the second welded portion 702 may be parallel to the first direction.

The second welded portion 702 may have a ring shape continuously extending along a circumference centered on a central axis of the connection boss 720. In other embodiments, a plurality of second welded portions 702 may be provided, and may have a shape arranged along the circumference centered on the central axis of the connection boss 720.

The second welded portion 702 may be formed by various types of welding methods such as laser welding, ultrasonic welding, friction stir welding, and the like. The second welded portion 702 may be formed of a mixture of the connection boss 720 and the terminal body 500 which are melted by the heat generated during welding.

The connection member 700 according to one or more embodiments may further include a guide rod 730.

The guide rod 730 may be connected to the connection plate 710, and guide the connection boss 720 to be inserted into the insertion hole 510.

The guide rod 730 according to one or more embodiments may have a rod shape extending from the upper surface of the connection plate 710 along the first direction. A central axis of the guide rod 730 may be disposed coaxially with the central axis of the connection boss 720. A cross-sectional shape of the guide rod 730 may be designed to have various shapes such as a circular shape, a polygonal shape, an oval shape, and the like.

As the connection boss 720 is inserted into the insertion hole 510, the guide rod 730 may be inserted into the connection boss 720 through the first boss surface 721a. Accordingly, the connection boss 720 may be inserted into the insertion hole 510 while maintaining a state in which the central axis is aligned parallel to the first direction.

When the first boss surface 721a of the connection boss 720 is in contact with the connection plate 710, an end surface of the guide rod 730 may be exposed to the space outside the connection boss 720 by passing through the second boss surface 722a. In this case, the end surface of the guide rod 730 may be disposed on the same plane as the second boss surface 722a and the terminal surface 501.

The connection boss 720 and the guide rod 730 may be joined by a guide welded portion 703.

The guide welded portion 703 according to one or more embodiments may be disposed between the connection boss 720 and the guide rod 730. The guide welded portion 703 may extend from the second boss surface 722a and the end surface of the guide rod 730 along the direction opposite to the first direction. A longitudinal direction of the guide welded portion 703 may be parallel to the first direction.

The guide welded portion 703 may have a ring shape continuously extending along a circumference centered on the central axis of the guide rod 730. In other embodiments, a plurality of guide welded portions 703 may be provided, and may be arranged along the circumference centered on the central axis of the guide rod 730.

The guide welded portion 703 may be formed by various types of welding methods such as laser welding, ultrasonic welding, friction stir welding, and the like. The guide welded portion 703 may be formed of a mixture of the connection boss 720 and the guide rod 730 which are melted by the heat generated during welding.

Hereinafter a secondary battery manufacturing method according to one or more embodiments of the present disclosure will be described.

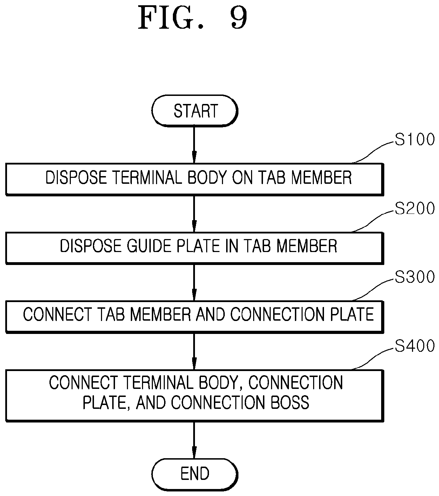

FIG. 9 is a flowchart schematically illustrating the order of the secondary battery manufacturing method according to one or more embodiments of the present disclosure.

Referring to FIG. 9, first, a terminal body 500 is disposed on a tab member 400 (S100).

Operation S100 may be performed in a state in which the terminal body 500 is coupled to a cap plate 300.

In operation S100, the cap plate 300 and the terminal body 500 may be moved to an upper side of the tab member 400 by a transfer device such as an adsorber or a gripper.

In operation S100, a pair of terminal bodies 500 may be disposed to face different tab members 400 along the first direction.

Operation S100 may be performed in a state in which an electrode assembly 200 is disposed in a case 100, or may also be performed before the electrode assembly 200 is disposed in the case 100.

After operation S100, a guide plate 600 is disposed in the tab member 400 (S200).

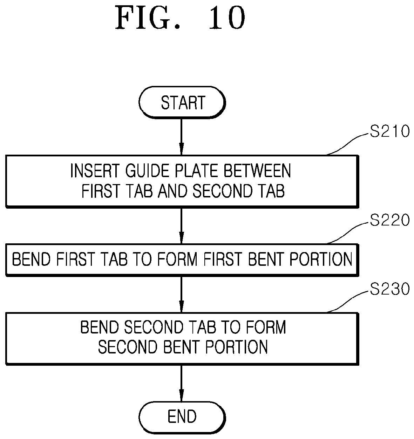

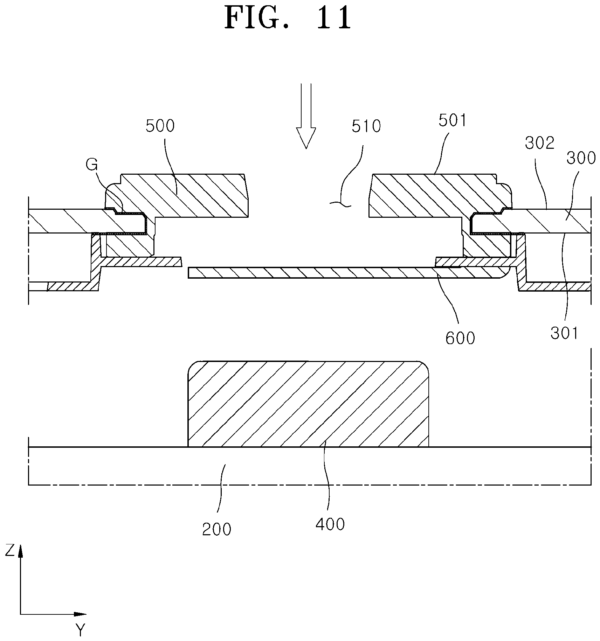

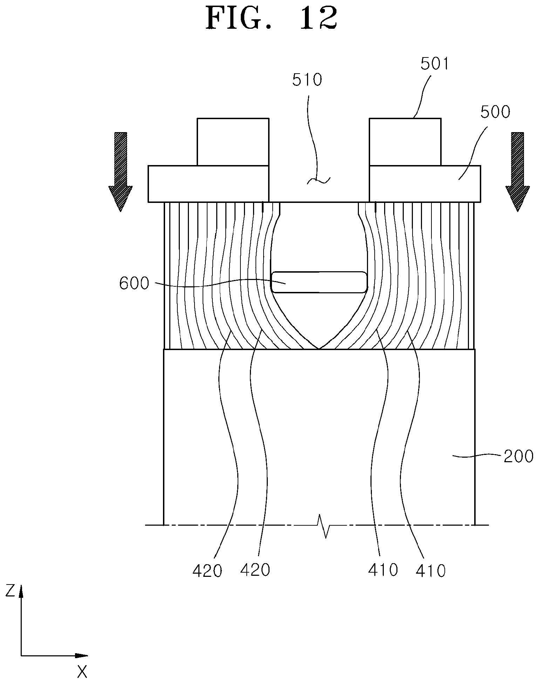

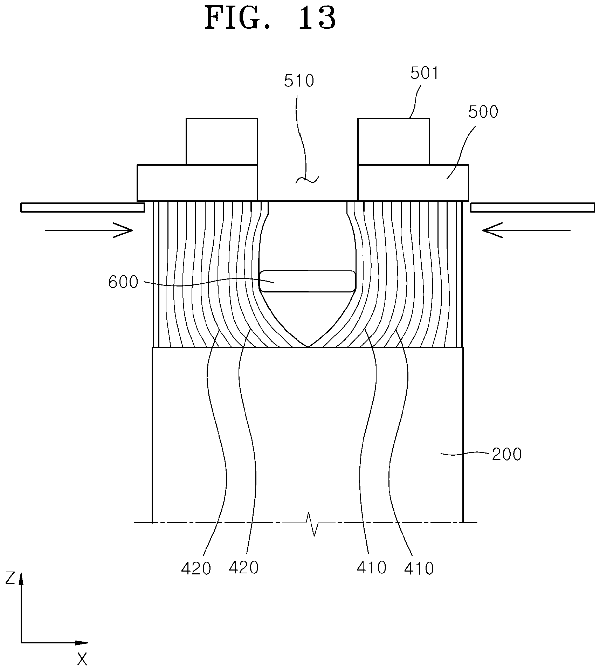

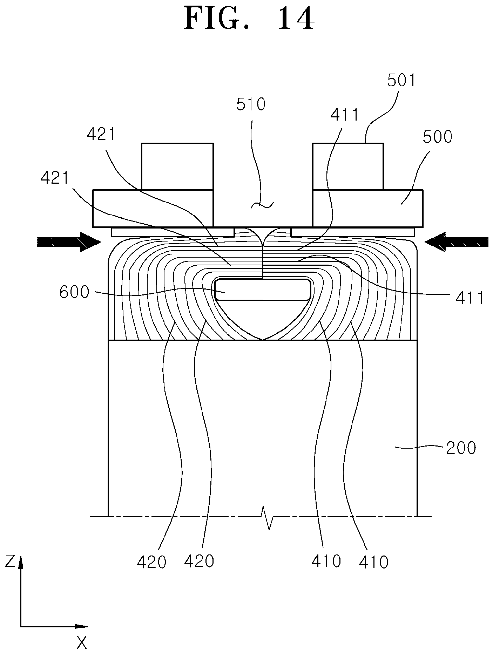

FIG. 10 is a flowchart schematically illustrating the order of disposing the guide plate in the tab member according to one or more embodiments of the present disclosure, and FIGS. 11 to 14 are views schematically illustrating a process of disposing the guide plate in the tab member according to one or more embodiments of the present disclosure.

In the specific description of operation S200 with reference to FIGS. 10 to 14, the guide plate 600 is inserted between a first tab 410 and a second tab 420 (S210).

For example, operation S210 may be performed by moving the terminal body 500 toward the tab member 400, that is, in the direction opposite to the first direction.

As the terminal body 500 is moved more than a set distance in the direction opposite to the first direction, the guide plate 600 may be inserted between boundary surfaces of the first tab 410 and the second tab 420.

In operation S210, the first tab 410 and the second tab 420 may maintain a state of being spaced apart from each other at a certain interval in a direction parallel to the second direction by a separate fixing tool such as a jig or the like. Accordingly, the guide plate 600 may be smoothly inserted between the first tab 410 and the second tab 420 without interference with the first tab 410 and the second tab 420.

After operation S210, the first tab 410 is bent toward the second tab 420 to form a first bent portion 411 (S220), and the second tab 420 is bent toward the first tab 410 to form a second bent portion 421 (S230).

Operations S220 and S230 may be sequentially performed, or may also be simultaneously performed.

Operations S220 and S230 may be performed using a pair of bending jigs J which can reciprocate at both sides of the tab member 400 in the direction parallel to the second direction.

For example, the pair of bending jigs J may be disposed to face each other along the second direction with the first tab 410 and the second tab 420 therebetween.

The pair of bending jigs J may be moved toward each other, and may press upper end portions of the first tab 410 and the second tab 420 in a state in which the guide plate 600 is inserted between the first tab 410 and the second tab 420.

Accordingly, the first tab 410 may be bent toward the second tab 420, and the first bent portion 411 may be formed at the upper end portion of the first tab 410.

Similarly, the second tab 420 may be bent toward the first tab 410, and the second bent portion 421 may be formed at the upper end portion of the second tab 420.

In operations S220 and S230, the first bent portion 411 and the second bent portion 421 may be seated on the upper surface of the guide plate 600, and the end portions of the first bent portion 411 and the second bent portion 421 may be disposed to face each other along the second direction. The end portions of the first bent portion 411 and the second bent portion 421 may be in contact with each other, or may also be disposed to be spaced apart from each other at a certain interval along the second direction.

Then, the pair of bending jigs J may be moved away from each other and separated from the first bent portion 411 and the second bent portion 421.

After operation S200, the tab member 400 and a connection plate 710 are connected (S300).

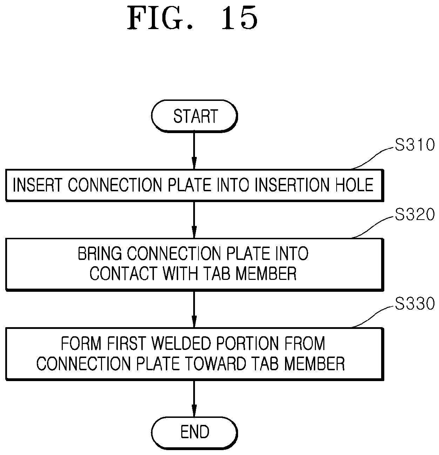

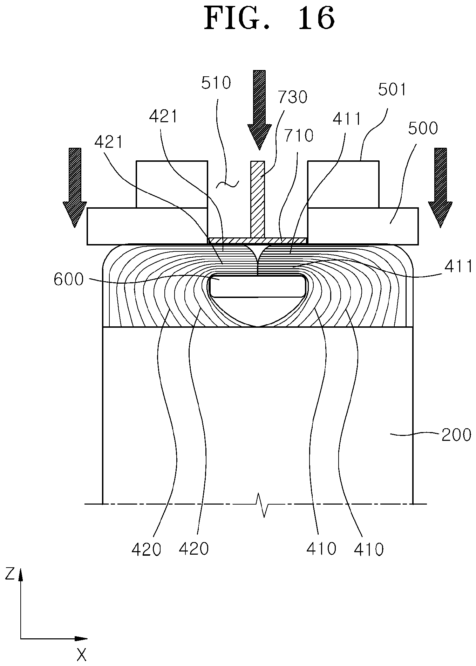

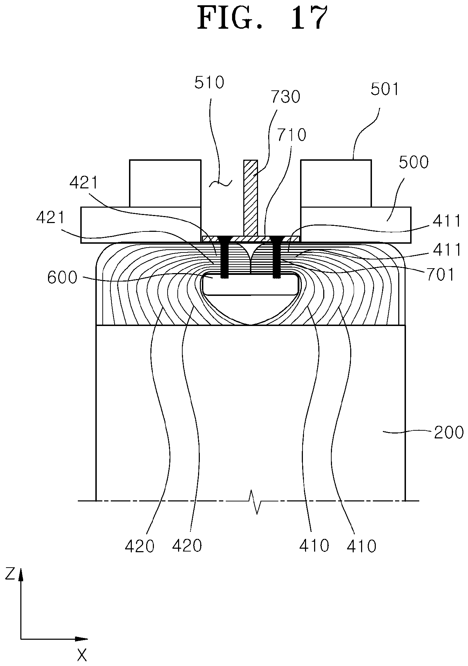

FIG. 15 is a flowchart schematically illustrating the order of connecting the tab member and the connection plate, and FIGS. 16 and 17 are views schematically illustrating a process of connecting the tab member and the connection plate.

In the specific description of operation S300 (see FIG. 9) with reference to FIGS. 15 to 17, the connection plate 710 is inserted into an insertion hole 510 in a state in which the first bent portion 411 and the second bent portion 421 are formed (S310).

In operation S310, the connection plate 710 may be moved in the direction opposite to the first direction in a state of being disposed to face an upper end portion of the insertion hole 510 along the first direction.

The connection plate 710 may enter the insertion hole 510 through the upper end portion of the insertion hole 510.

After operation S310, the connection plate 710 is brought into contact with the tab member 400 (S320).

In operation S320, as the connection plate 710 is moved more than a certain distance in the insertion hole 510 in the direction opposite to the first direction, the lower surface of the connection plate 710 may come into contact with the tab member 400, more specifically, the first bent portion 411 and the second bent portion 421.

After operation S320, a first welded portion 701 is formed from the connection plate 710 toward the tab member 400 (S330).

For example, operation S330 may be performed by a laser welder using a laser beam as a heat source. The laser welder may enter the insertion hole 510 in a state in which the lower surface of the connection plate 710 is in contact with the tab member 400, and irradiate a laser beam toward the upper surface of the connection plate 710 in the direction opposite to the first direction.

The first welded portion 701 may progressively extend from the connection plate 710 along the direction opposite to the first direction, and may mutually join the connection plate 710 and the tab member 400.

In operation S330, both end portions of the first welded portion 701 may be respectively disposed in the connection plate 710 and the guide plate 600.

That is, in operation S330, the laser welder may continue to irradiate a laser beam until the lower end portion of the first welded portion 701 reaches the guide plate 600.

Accordingly, in operation S330, both sides of the tab member 400 are integrally joined to the connection plate 710 and the guide plate 600, respectively, to be firmly fixed between the connection plate 710 and the guide plate 600.

Operation S330 may be performed separately for the first bent portion 411 of the first tab 410 and the second bent portion 421 of the second tab 420.

Operation S330 may be repeated a plurality of times for the first bent portion 411 of the first tab 410, and may be repeated a plurality of times for the second bent portion 421 of the second tab 420.

After operation S300, the tab member 400, the terminal body 500, the connection plate 710, and the connection boss 720 are connected (S400).

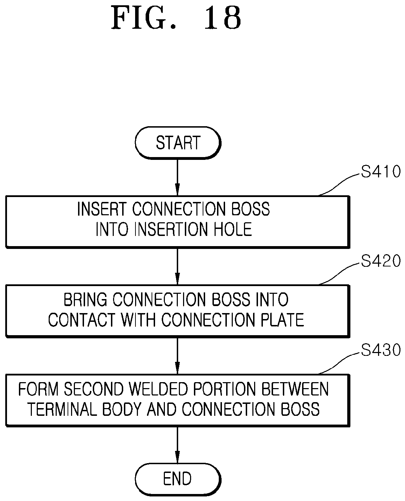

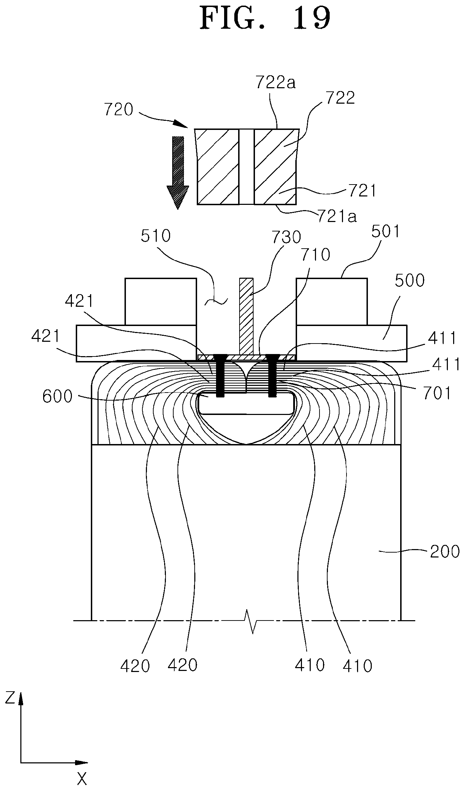

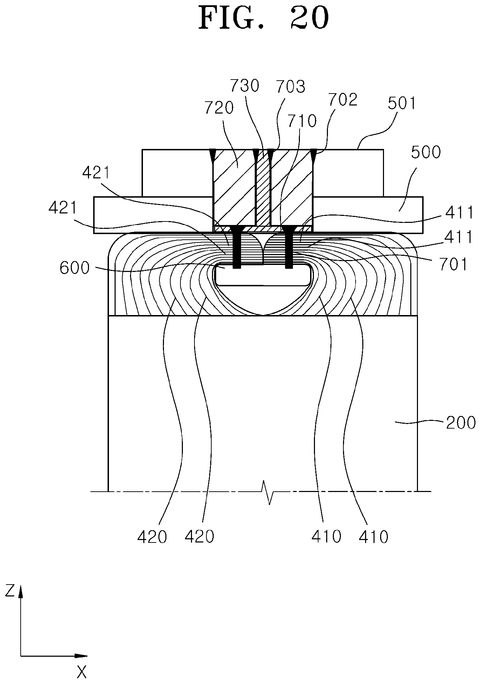

FIG. 18 is a flowchart schematically illustrating the order of connecting the terminal body, the connection plate, and the connection boss, and FIGS. 19 and 20 are views schematically illustrating a process of connecting the terminal body, the connection plate, and the connection boss.

In the specific description of operation S400 with reference to FIGS. 18 to 20, after forming the first welded portion 701, the connection boss 720 is inserted into the insertion hole 510 (S410).

In operation S410, the connection boss 720 may be moved in the direction opposite to the first direction in a state of being disposed to face the upper end portion of the insertion hole 510 along the first direction.

The connection boss 720 may enter the insertion hole 510 through the upper end portion of the insertion hole 510.

In operation S410, as the connection boss 720 enters the insertion hole 510, a guide rod 730 extending from the connection plate 710 may be inserted into the connection boss 720.

Accordingly, an insertion direction of the connection boss 720 may be aligned in a direction parallel to the first direction.

After operation S410, the connection boss 720 is brought into contact with the connection plate 710 (S420).

In operation S420, as the connection boss 720 is moved more than a certain distance in the insertion hole 510 in the direction opposite to the first direction, the first boss surface 721a of the connection boss 720 may come into contact with the upper surface of the connection plate 710.

As the connection boss 720 and the connection plate 710 are formed of a conductive material, the connection boss 720 and the connection plate 710 may be electrically interconnected.

After operation S420, a second welded portion 702 is formed between the terminal body 500 and the connection boss 720 (S430).

For example, operation S430 may be performed by a laser welder using a laser beam as a heat source. The laser welder may irradiate a laser beam toward a boundary region of the second boss surface 722a and the terminal surface 501 in the direction opposite to the first direction in a state in which the second boss surface 722a is located on the same plane as the terminal surface 501.

The second welded portion 702 may progressively extend from the boundary region of the second boss surface 722a and the terminal surface 501 along the direction opposite to the first direction, and may mutually join the terminal body 500 and the connection boss 720.

Operation S430 may be performed continuously along a circumferential direction of the second welded portion 702 centered on a central axis of the connection boss 720, or may be repeatedly performed at a set interval.

The secondary battery manufacturing method according to one or more embodiments may further include forming a guide welded portion 703 between the connection boss 720 and the guide rod 730 after operation S430.

The laser welder may irradiate a laser beam toward a boundary region of the second boss surface 722a and an end surface of the guide rod 730 in the direction opposite to the first direction in a state in which the second boss surface 722a and the end surface of the guide rod 730 are located on the same plane.

The guide welded portion 703 may progressively extend from the boundary region of the second boss surface 722a and the end surface of the guide rod 730 along the direction opposite to the first direction, and may mutually join the connection boss 720 and the guide rod 730.

The present disclosure is directed to providing a secondary battery and a method of manufacturing the same capable of improving welding quality and simplifying a welding process.

According to the present disclosure, a first tab and a second tab included in a single tab member can be bent in opposite directions to prevent welding of portions of the tab member from being missed.

According to the present disclosure, as a current collector component for an electrical connection with a conventional tab member is omitted, process efficiency can be enhanced and deterioration of assembly due to misalignment of components can be prevented.

According to the present disclosure, as a first bent portion and a second bent portion are not stacked with each other on a guide plate, damage to the first tab and the second tab and deterioration of welding quality can be prevented.

According to the present disclosure, as both end portions of a first welded portion are respectively disposed in a connection plate and the guide plate, the tab member can be more firmly fixed between the connection plate and the guide plate.

According to the present disclosure, as the guide plate is disposed between the connection plate and an electrode assembly, a laser beam or the like can be prevented from entering the electrode assembly.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of one or more embodiments.

Therefore, the technical scope of the present disclosure should be defined by the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

## Claims

1. A secondary battery, comprising:
a case (100);
an electrode assembly (200) in the case (100);
a cap plate (300) that seals the case (100);
a tab member (400) connected to the electrode assembly (200), the tab member (400) extending toward the cap plate (300);
a terminal body (500) coupled to the cap plate (300), the terminal body (500) facing the tab member (400);
a guide plate (600) extending from the terminal body (500), the guide plate (600) being in the tab member (400); and
a connection member (700) in the terminal body (500), the connection member (700) being connected to the tab member (400).

2. The secondary battery as claimed in claim 1, wherein:
the tab member (400) comprises one or more first tabs (410) extending in a first direction from the electrode assembly (200) and one or more second tabs (420) extending in the first direction from the electrode assembly (200),
the first tab (410) and the second tab (420) face each other along a second direction intersecting the first direction, and
the guide plate (600) is between the first tab (410) and the second tab (420).

3. The secondary battery as claimed in claim 2, wherein the guide plate (600) extends along a third direction intersecting the first direction and the second direction.

4. The secondary battery as claimed in claim 2 or 3, wherein the tab member (400) further comprises:
a first bent portion (411) at an end portion of the first tab (410) and bent toward the second tab (420); and
a second bent portion (421) at an end portion of the second tab (420), the second bent portion (421) being bent toward the first tab (410).

5. The secondary battery as claimed in claim 4, wherein the first bent portion (411) and the second bent portion (421) are between the terminal body (500) and the guide plate (600).

6. The secondary battery as claimed in claim 4, wherein the end portion of the first bent portion (411) and the end portion of the second bent portion (421) face each other along the second direction.

7. The secondary battery as claimed in claims 2 to 6, wherein the connection member (700) comprises:
a connection plate (710) inserted into an insertion hole (510) passing through the terminal body (500) along the first direction, the connection plate (710) being connected to the tab member (400); and
a connection boss (720) inserted into the insertion hole (510), the connection boss (720) being connected to the connection plate (710) and the terminal body (500).

8. The secondary battery as claimed in claim 7, wherein the connection boss (720) comprises:
a first boss (721) comprising a first boss surface (721a) in contact with the connection plate (710); and
a second boss (722) extending from the first boss (721), the second boss (722) comprising a second boss surface (722a) exposed to the outside of the terminal body (500).

9. The secondary battery as claimed in claim 8, wherein:
the terminal body (500) comprises a terminal surface (501) outside the cap plate (300) and perpendicular to the first direction; and
the second boss surface (722a) and the terminal surface (501) are on a same plane.

10. The secondary battery as claimed in claims 7 to 9, wherein the connection member (700) further comprises a first welded portion (701) extending from the connection plate (710) toward the tab member (400).

11. The secondary battery as claimed in claims 7 to 10, wherein the connection member (700) further comprises a guide rod (730) extending from the connection plate (710) along the first direction, the guide rod (730) being inserted into the connection boss (720).

12. The secondary battery as claimed in claims 1 to 11, wherein the electrode assembly (200) comprises a first electrode (210), a second electrode (220), and a separator (230) disposed between the first electrode (210) and the second electrode (220), wherein the separator (230) is disposed to entirely cover a surface region of the electrode assembly (200) in order to prevent the first electrode (210) and the second electrode (220) from being directly exposed to the outside of the electrode assembly (200).

13. A secondary battery manufacturing method, comprising:
disposing a terminal body (500) on a tab member (400), the tab member (400) comprising a first tab (410) and a second tab (420);
disposing a guide plate (600) in the tab member (400);
connecting the tab member (400) and a connection plate (710); and
connecting the terminal body (500), the connection plate (710), and a connection boss (720).

14. The secondary battery manufacturing method as claimed in claim 13, wherein disposing the guide plate (600) in the tab member (400) comprises:
inserting the guide plate (600) between the first tab (410) and the second tab (420);
bending the first tab (410) toward the second tab (420) to form a first bent portion (411); and
bending the second tab (420) toward the first tab (410) to form a second bent portion (421).

15. The secondary battery manufacturing method as claimed in claim 13 or 14, wherein connecting the tab member (400) and the connection plate (710) comprises:
inserting the connection plate (710) into an insertion hole (510);
bringing the connection plate (710) into contact with the tab member (400); and
forming a first welded portion (701) from the connection plate (710) toward the tab member (400) and/or wherein connecting the terminal body (500), the connection plate (710), and the connection boss (720) comprises:
inserting the connection boss (720) into the insertion hole (510);
bringing the connection boss (720) into contact with the connection plate (710); and
forming a second welded portion (702) between the terminal body (500) and the connection boss (720).
